# EUROPÄISCHE PATENTSCHRIFT

(11) **EP 0 685 379 B1**
(45) Veröffentlichungstag und Bekanntmachung des Hinweises auf die Patenterteilung: **16.12.1998**
(21) Anmeldenummer: 95107427.7
(22) Anmeldetag: 16.05.1995
(51) Int. Cl.: B62D 1/10, F16D 1/08

(54) **Befestigungsvorrichtung für ein Fahrzeuglenkrad**
Device for securing a steering wheel of a motor vehicle
Dispositif de fixation d'un volant d'un véhicule automobile

(30) Priorität: 31.05.1994 DE 4419078
(43) Veröffentlichungstag der Anmeldung: 06.12.1995
(73) Patentinhaber: TRW Occupant Restraint Systems GmbH & Co. KG, 73551 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- DE-A- 4 013 810
- DE-A- 4 130 251
- DE-C- 921 902
- FR-A- 2 715 906
- GB-A- 1 189 798

## Beschreibung

Die Erfindung betrifft eine Befestigungsvorrichtung für ein Fahrzeuglenkrad gemäß dem Oberbegriff der Patentansprüche 1 bzw. 2, wie sie aus der DE-A-41 30 251 bekannt ist. Mit einer solchen Befestigungsvorrichtung wird eine drehfeste Verbindung zwischen Lenkrad und Lenkwelle durch ineinandergreifende Kerbverzahnungen hergestellt.

Neben der drehfesten Verbindung zwischen Lenkwelle und Lenkrad bedarf es auch einer axialen Festlegung dieser Fahrzeugteile aneinander. Diese axiale Festlegung wird nach derzeitigen Stand der Technik mittels einer Schraubmutter erreicht, die auf das freie Ende der Lenkwelle aufgeschraubt wird. Diese Art der Befestigung des Lenkrades kommt dem Bedarf entgegen, bei der Endmontage des Fahrzeugs nach abgeschlossener Einstellung der Lenkgeometrie zum Ausgleich sämtlicher Summentoleranzen das Lenkrad leicht von der Lenkwelle abnehmen und in der korrekten Winkelposition wieder aufschieben zu können, da die Schraubmutter mit wenigen Handgriffen gelöst und wieder festgezogen ist. Eine Korrektur der Winkelstellung des Lenkrades ist auch nach einer Neueinstellung der Lenkgeometrie erforderlich. Da die herkömmliche Lenkradbefestigung sich hinsichtlich der Zuverlässigkeit, Einfachheit und leichten Demontierbarkeit des Lenkrades bewährt hat, wird an ihr festgehalten, obwohl sie sich in bestimmten Fällen als ungünstig erweist.

Bei der aus der oben genannten DE-A-41 30 251 bekannten Befestigungsvorrichtung kann des Lenkrad in axialer Richtung auf der Lenkwelle zwischen einer auf das Ende der Lenkwelle aufgeschraubten Mutter und einem dieser in einem Abstand gegenüberliegenden Anschlag verschoben werden, wobei die Arretierung in der jeweils gewünschten Stellung mittels eines Gewindebolzens erfolgt, der eine Paßfeder in einer Nut in der Lenkwelle festspannt.

Fahrzeuge werden in zunehmendem Maße mit Gassack-Insassenrückhaltesystemen ausgestattet. Auf der Fahrerseite wird der Gassack üblicherweise mit einem pyrotechnischen Gasgenerator im Lenkrad integriert. Bei der Montage des Lenkrades kann der sogenannte Airbag-Modul erst nach erfolgter Befestigung an der Lenkwelle eingebaut werden. Es wurden zwar bereits Systeme mit ringförmigem Gasgenerator und schlauchringförmigem Gassack vorgeschlagen (DE 36 30 685 A1), jedoch schränkt die Schlauchringform des Gassacks die Gestaltungsfreiheit bei der Optimierung des Systems ein.

Durch die Erfindung wird eine Befestigungsvorrichtung für ein Fahrzeuglenkrad zur Verfügung gestellt, die in gleichem Maße wie die herkömmliche Befestigungsvorrichtung eine leichte Demontage des Lenkrades ermöglicht, jedoch ohne eine Schraubmutter zu axialen Festlegung des Lenkrades auf der Welle auskommt, so daß komplett vormontierte Baugruppen aus Lenkrad und integriertem Airbag-Modul angeliefert und der Endmontage zugeführt werden können. Erreicht wird mit einer Gestaltung gemäß den Patentansprüchen 1 bzw. 2. Für die Befestigung des Lenkrades ist bei der erfindungsgemäßen Gestaltung kein Zugang in das Innere der Lenkradnabe erforderlich. Das Verspannen der Kerbverzahnungen quer zur gemeinsamen Achse des Lenkrades und der Lenkwelle erfolgt vorzugsweise mittels Spannschrauben, die mit einem quer zu dieser Achse angesetzten Werkzeug angezogen bzw. gelöst werden können.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine schematische Seitenansicht eines Lenkrades vor dem Aufsetzen auf das Ende einer Lenkwelle;
- Fig. 2: eine axiale Schnittansicht der Befestigungsvorrichtung für das Fahrzeuglenkrad;
- Fig. 3: einen Schnitt entlang Linie III-III in Fig. 2;
- Fig. 4: eine Schnittansicht einer anderen Ausführungsform der Befestigungsvorrichtung;
- Fig. 5: einen axialen Schnitt einer weiteren Ausführungsform der Befestigungsvorrichtung;
- Fig. 6: eine Schnittansicht quer zur Ansicht in Fig. 5; und
- Fig. 7: eine schematische Explosionsansicht der Befestigungsvorrichtung nach den Fig. 5 und 6.

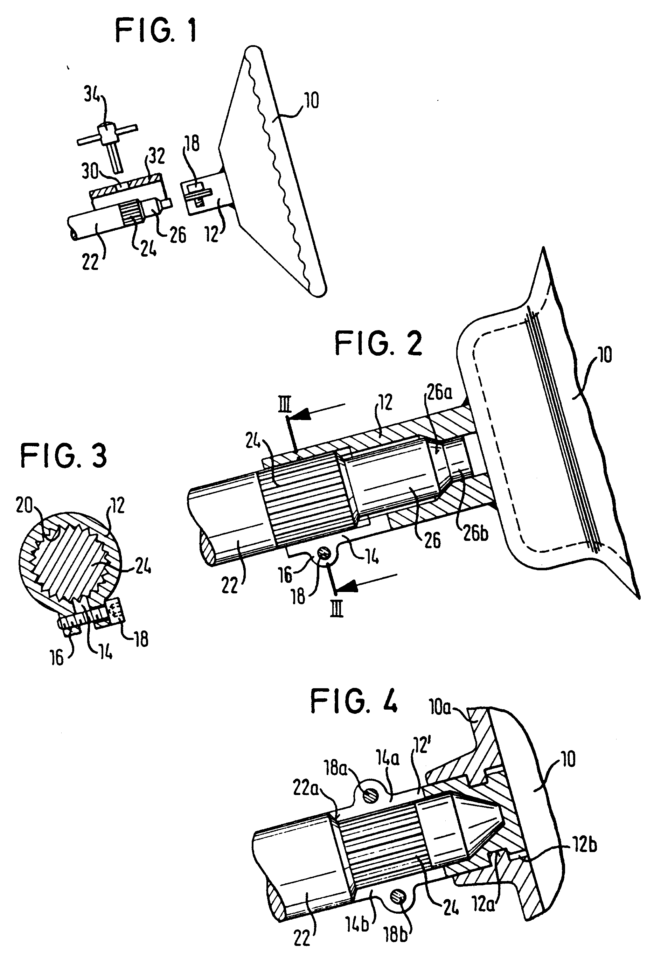

Bei der in den Fig. 1, 2 und 3 gezeigten Ausführungsform ist am Boden der Nabe eines Lenkrades 10 eine Verbindungshülse 12 angeschweißt. Die Verbindungshülse 12 ist auf ihrer von dem Lenkrad 10 abgewandten Seite mit einem axialen Schlitz 14 versehen. Einander gegenüberliegend sind an den Rändern dieses Schlitzes 14 zwei flanschartige Ansätze 16 gebildet, von denen der eine eine Durchgangsbohrung und der andere eine mit dieser fluchtende Gewindebohrung für eine Spannschraube 18 aufweist. Die Verbindungshülse 12 ist innenseitig an ihrem von dem Lenkrad 10 abgewandten Ende mit einer Kerbverzahnung 20 versehen. Eine entsprechende, außenseitige Kerbverzahnung befindet sich an dem freien Ende einer Lenkwelle 22 auf einem Abschnitt 24, der zwischen der Lenkwelle und einem Zentrierfortsatz 26 liegt. Der Zentrierforsatz 26 weist eine konische Schulter 26a und am freien Ende einen Zentrierzapfen 26b auf. Die Verbindungshülse 12 ist innenseitig an ihrem dem Lenkrad 10 zugewandten Ende entsprechend dem Zentrierzapfen 26b und der konischen Schulter 26a geformt.

Das Lenkrad 10 bildet vorzugsweise mit einem (nicht gezeigten) integrierten Airbag-Modul eine komplett vormontierte Baugruppe. Diese wird bei der Endmontage eines Fahrzeugs fertig angeliefert. Das Lenkrad 10 wird in die korrekte Drehstellung gebracht und an der Verbindungshülse 12 auf das Ende der Lenkwelle 22 aufgeschoben. Durch eine Öffnung 30 in einem Teil 32 des Fahrzeugaufbaus wird ein Werkzeug 34 eingeführt, um die Spannschraube 18 einzusetzen und festzuspannen, wobei der axiale Spalt 14 verengt und die Verbindungshülse 12 durch Reibungsschluß auf dem mit der Kerbverzahnung versehenen Abschnitt 24 der Lenkwelle 22 festgelegt wird. Eine eventuell später erforderliche Korrektur der Drehstellung des Lenkrades 10 kann ohne Ausbau des Airbag-Moduls erfolgen, da nach Lösen der Spannschraube 18 die komplette Lenkrad-Baugruppe von der Lenkwelle 22 abgezogen, verdreht und wieder aufgesetzt werden kann.

Bei der in Fig. 4 gezeigten Ausführungsvariante ist eine Verbindungshülse 12' mit zwei axialen Schlitzen 14a, 14b vorgesehen. Da der Grundkörper 10a des Lenkrades 10 als Druckgußteil ausgebildet ist, kommt eine Befestigung der Verbindungshülse 12 durch Anschweißen nicht in Betracht. Vielmehr wird die Verbindungshülse 12 durch Umformen mit dem Grundkörper 10a des Lenkrades 10 formschlüssig verbunden. Wie aus Fig. 4 ersichtlich ist, besitzt die Verbindungshülse 12' an ihrem dem Lenkrad 10 zugewandten Ende eine umlaufende Nut 12a, in die eine entsprechende Rippe am Grundkörper 10a eingreift, sowie eine Rändelung 12b, um die sich eine entsprechende Rändelung am Grundkörper 10a legt. Die Lenkwelle 22 ist mit einer Anschlagschulter 22a für die Verbindungshülse 12' versehen, um eine definierte axiale Position des Lenkrades an der Lenkwelle zu erreichen.

Bei dieser Ausführungsform erfolgt die Befestigung mittels zweier einander diametral gegenüberliegender Spannschrauben 18a, 18b.

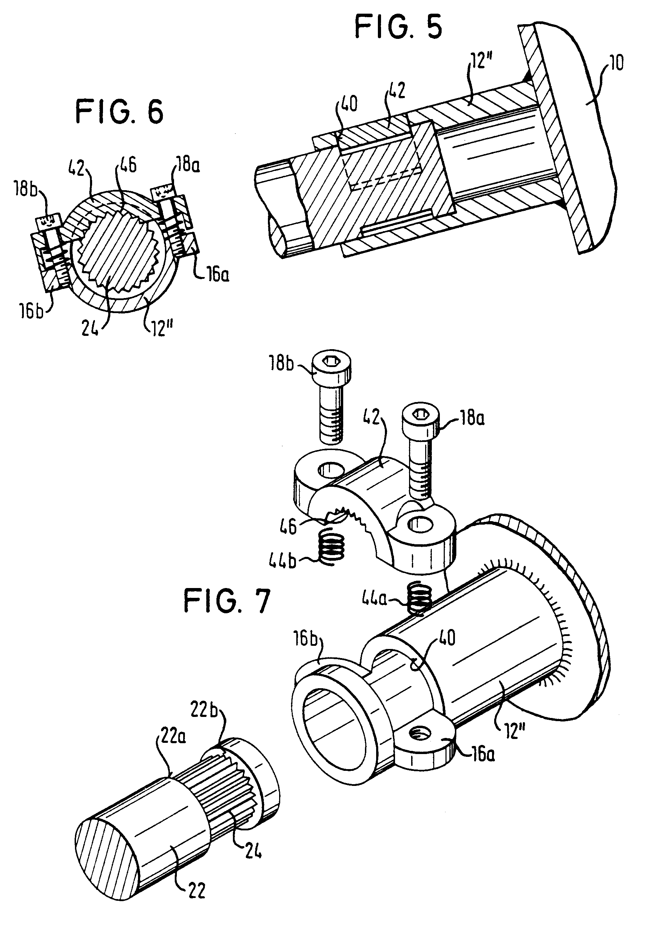

Bei der Ausführungsform nach den Fig. 5, 6 und 7 ist die Verbindungshülse 12'' mit einem quer zur gemeinsamen Achse von Lenkrad und Lenkwelle gelegten Ausschnitt 40 versehen, in den ein Spannbügel 42 passend eingesetzt werden kann. Den Flanschen an den Enden des Spannbügels 42 liegen entsprechend gestaltete Ansätze 16a, 16b der Verbindungshülse 12'' gegenüber. Diese flanschähnlichen Ansätze 16a, 16b sind jeweils mit einer Gewindebohrung versehen, in die eine Spannschraube 18a, 18b, welche eine entsprechende Durchgangsbohrung in einem Flansch des Spannbügels 42 durchsetzt, eingeschraubt wird. Zwischen den Ansätzen 16a, 16b und dem Spannbügel 42 wird jeweils eine Druckfeder 44a, 44b eingefügt, so daß der Spannbügel 42 in Richtung radial von der Verbindungshülse 12'' fort vorbelastet wird.

Innenseitig ist der Spannbügel 42 mit einer Kerbverzahnung 46 versehen. Die Verbindungshülse 12'' weist hingegen innenseitig keine Kerbverzahnung auf.

An dem freien Ende der Lenkwelle 22 ist zwischen zwei umlaufenden Schultern 22a, 22b ein außenseitig mit einer Kerbverzahnung versehener Abschnitt 24 gebildet.

Zur Montage des Lenkrades wird die Verbindungshülse 12'' auf das Ende der Lenkwelle 22 aufgeschoben. Der Spannbügel 42 ist bereits aufgesetzt, jedoch sind die Spannschrauben 18a, 18b so weit gelöst, daß der Spannbügel 42 nicht in das Innere der Verbindungshülse 12'' hineinragt. Das Lenkrad wird nun in die korrekte axiale Position gebracht, in welcher die Schultern 22a, 22b am Ende der Lenkwelle 22 mit den Rändern des Ausschnitts 40 ausgerichtet sind. Nachdem das Lenkrad in die korrekte Drehstellung gebracht ist, können nun die Spannschrauben 18a, 18b festgezogen werden, wodurch der Spannbügel 42 zwischen die Schultern 22a, 22b greift und letztlich auf der Kerbverzahnung an dem Abschnitt 24 der Lenkwelle 22 festgespannt wird.

Bei dieser Ausführungsform wird das Auffinden der korrekten Axialposition des Lenkrades an der Lenkwelle in gleicher Weise erleichtert, wie in Fig. 1 angedeutet, indem geeignete Öffnungen in einem festen Fahrzeugteil für den Durchgang eines Werkzeugs vorgesehen werden.

## Patentansprüche

1. Befestigungsvorrichtung für ein Fahrzeuglenkrad (10), bei der eine drehfeste Verbindung zwischen Lenkrad (10) und Lenkwelle (22) durch ineinandergreifende Kerbverzahnungen hergestellt ist, wobei an der Nabe des Lenkrades eine Verbindungshülse (12) befestigt ist, die innenseitig mit einer der Kerbverzahnungen versehen und auf das außenseitig mit der anderen Kerbverzahnung versehene Ende der Lenkwelle (22) aufgeschoben ist, dadurch gekennzeichnet, daß die Verbindungshülse (12) wenigstens einen axialen Schlitz (14) aufweist und daß an dem wenigstens einen axialen Schlitz (14) Führungsmittel (16) für eine Spannschraube (18) angebracht sind, mittels welcher die Verbindungshülse (12) durch Verengung des axialen Schlitzes (14) auf dem Ende der Lenkwelle (22) verspannbar ist, so daß das Lenkrad (10) und die Lenkwelle (22) in Richtung ihrer gemeinsamen Achse durch Verspannen der Kerbverzahnungen quer zu dieser Achse aneinander festgelegt sind.

2. Befestigungsvorrichtung für ein Fahrzeuglenkrad (10), bei der eine drehfeste Verbindung zwischen Lenkrad (10) und Lenkwelle (22) durch ineinandergreifende Kerbverzahnungen hergestellt ist, wobei an der Nabe des Lenkrades eine Verbindungshülse (12'') befestigt ist, die auf das außenseitig mit einer der Kerbverzahnungen versehene Ende der Lenkwelle (22) aufgeschoben ist, dadurch gekennzeichnet, daß die Verbindungshülse (12'') quer zur Achse einen Ausschnitt (40) aufweist, in den ein Spannbügel (42) einsetzbar ist, daß der Spannbügel (42) innenseitig mit der anderen Kerbverzahnung (46) versehen und das außenseitig mit der anderen Kerbverzahnung versehene Ende (24) der Lenkwelle (22) in die Verbindungshülse (12'') eingeschoben ist und daß der Spannbügel (42) durch wenigstens eine Spannschraube (18a, 18b) an der Verbindungshülse (12'') befestigt und gegen die Kerbverzahnung am Ende der Lenkwelle (22) verspannt ist, so daß das Lenkrad (10) und die Lenkwelle (22) in Richtung ihrer gemeinsamen Achse durch Verspannen der Kerbverzahnungen quer zu dieser Achse aneinander festgelegt sind.

3. Befestigungsvorrichtung nach Anspruch 2, dadurch gekennzeichnet, daß die Kerbverzahnung an einem Abschnitt (24) der Lenkwelle (22) zwischen zwei axial beabstandeten Schultern (22a, 22b) begrenzt ist, die für den Spannbügel (42) axiale Anschläge bilden.

4. Befestigungsvorrichtung nach Anspruch 2 oder 3, dadurch gekennzeichnet, daß der Spannbügel (42) durch wenigstens eine Druckfeder (44a, 44b) entgegen der Spannrichtung vorbelastet ist.

5. Befestigungsvorrichtung nach einem der vorhergehenden Ansprüche, dadurch gekennzeichnet, daß eine Führung (30, 32) für ein an der Spannschraube (18) angreifendes Werkzeug an einer vorbestimmten axialen Position relativ zu der Lenkwelle (22) vorgesehen ist.

6. Befestigungsvorrichtung nach einem der vorstehenden Ansprüche, dadurch gekennzeichnet, daß am Ende der Lenkwelle (22) ein radial verengter Zentrieransatz (26) gebildet ist, der formschlüssig in eine Verengung in der Verbindungshülse (12) eingreift.

7. Befestigungsvorrichtung nach einem der vorstehenden Ansprüche, dadurch gekennzeichnet, daß die Verbindungshülse (12') mit dem als Druckgußteil (10a) ausgebildeten Lenkrad (10) durch formschlüssiges Umformen verbunden ist.

## Claims

1. An attachment device for a vehicle steering wheel (10) in which a connection adapted to prevent relative rotation between the steering wheel (10) and the steering shaft (22) is produced by means of interlocking splines, a connecting sleeve (12) being attached to the hub of the steering wheel, the connecting sleeve being internally provided with one set of the splines and being slipped onto the end, externally provided with the other set of the splines, of the steering shaft (22), characterized in that the connecting sleeve (12) has at least one axial slot (14) and that guide means (16) are arranged on the at least one axial slot (14) for a clamping screw (18) by means of which the connecting sleeve (12) can be clamped on the end of the steering shaft (22) by narrowing the axial slot (14) such that the steering wheel (10) and the steering shaft (22) are locked together in the direction of their common axis by urging the splines against each other transversely in relation to this axis.

2. An attachment device for a vehicle steering wheel (10) in which a connection adapted to prevent relative rotation between the steering wheel (10) and the steering shaft (22) is produced by means of interlocking splines, a connecting sleeve (12'') being attached to the hub of the steering wheel, the connecting sleeve being slipped onto the end, externally provided with one set of the splines, of the steering shaft (22), characterized in that the connecting sleeve (12'') has, in a direction transverse to the axis, a cutout (40) into which a clamping yoke (42) can be inserted, that the clamping yoke (42) is internally provided with the other set of the splines (46) and the end (24), externally provided with the other set of the splines, of the steering shaft (22) is inserted into the connecting sleeve (12''), and that the clamping yoke (42) is secured by at least one clamping screw (18a, 18b) on the connecting sleeve (12'') and is clamped against the splines on the end of the steering shaft (22), such that the steering wheel (10) and the steering shaft (22) are locked together in the direction of their common axis by urging the splines against each other transversely in relation to this axis.

3. The attachment device according to claim 2, characterized in that the splines on a section (24) of the steering shaft (22) are limited to a location between two axially spaced shoulders (22a, 22b) which constitute axial abutments for the clamping yoke (42).

4. The attachment device according to claim 2 or claim 3, characterized in that the clamping yoke (42) is biased by at least one compression spring (44a, 44b) against the direction of clamping.

5. The attachment device according to any of the preceding claims, characterized in that a guide (30, 32) for a tool engaging the clamping screw (18) is provided at a predetermined axial position in relation to the steering shaft (22).

6. The attachment device according to any of the preceding claims, characterized in that a radially narrowed centering lug (26) is formed at the end of the steering shaft (22) and interlockingly fits into a narrowed part in the connecting sleeve (12).

7. The attachment device according to any of the preceding claims, characterized in that the connecting sleeve (12') is connected by interlocking swaging with the steering wheel (10) which is in the form of an injection casting (10a).

## Revendications

1. Dispositif de fixation pour un volant de direction de véhicule (10), dans lequel est établie une liaison de solidarité en rotation entre le volant de direction (10) et l'arbre de direction (22) au moyen de profils dentelés venant en prise l'un dans l'autre, un manchon de liaison (12) étant fixé sur le moyeu du volant de direction, manchon de liaison qui est pourvu du côté intérieur de l'un des profils dentelés et est enfilé sur l'extrémité de l'arbre de direction (22), qui est pourvue du côté extérieur de l'autre profil dentelé, caractérisé en ce que le manchon de liaison (12) présente au moins une fente axiale (14) et en ce que des moyens de guidage (16) pour une vis de serrage (18) sont mis sur au moins l'une des fentes axiales (14), vis de serrage à l'aide de laquelle le manchon de liaison (12) peut être serré par un rétrécissement de la fente axiale (14) à l'extrémité de l'arbre (22) de direction, de telle sorte que le volant de direction (10) et l'arbre de direction (22) soient fixés l'un à l'autre dans le sens de leur axe commun en serrant les profils dentelés perpendiculairement à cet axe.

2. Dispositif de fixation pour un volant de direction (10) de véhicule, dans lequel est établie une liaison de solidarité en rotation entre le volant de direction (10) et l'arbre de direction (22) au moyen de profils dentelés venant en prise l'un dans l'autre, un manchon de liaison (12'') étant fixé sur le moyeu du volant de direction, manchon de liaison qui est enfilé sur l'extrémité de l'arbre de direction (22), qui est pourvue du côté extérieur de l'un des profils dentelés, caractérisé en ce que le manchon de liaison (12'') présente perpendiculairement à l'axe une entaille (40), dans laquelle on peut insérer un étrier de serrage (42), en ce que l'étrier de serrage (42) est pourvu du côté intérieur de l'autre profil dentelé (46) et en ce que l'on enfile l'extrémité (24) de l'arbre de direction (22), qui est pourvue du côté extérieur de l'autre profil dentelé, dans le manchon de liaison (12''), et en ce que l'étrier de serrage (42) est fixé par au moins une vis de serrage (18a, 18b) sur le manchon de liaison (12'') et est serré contre le profil dentelé à l'extrémité de l'arbre de direction (22), de telle sorte que le volant de direction (10) et l'arbre de direction (22) soient fixés l'un à l'autre dans le sens de leur axe commun en serrant les profils dentelés perpendiculairement à cet axe.

3. Dispositif de fixation selon la revendication 2, caractérisé en ce que le profil dentelé est limité à une section (24) de l'arbre de direction (22) comprise entre deux épaulements espacés axialement (22a, 22b), qui forment des butées axiales pour l'étrier de serrage (42).

4. Dispositif de fixation selon la revendication 2 ou 3, caractérisé en ce que l'étrier de serrage (42) est précontraint par au moins un ressort de compression (44a, 44b) en sens inverse du sens de serrage.

5. Dispositif de fixation selon l'une des revendications précédentes, caractérisé en ce que l'on prévoit un guidage (30, 32) pour un outil venant en prise sur la vis de serrage (18) dans une position axiale prédéterminée par rapport à l'arbre de direction (22).

6. Dispositif de fixation selon l'une des revendications précédentes, caractérisé en ce qu'à l'extrémité de l'arbre de direction (22) est formé un appendice de centrage rétréci radialement (26), qui vient en prise par complémentarité de formes dans un rétrécissement du manchon de liaison (12).

7. Dispositif de fixation selon l'une des revendications précédentes, caractérisé en ce que le manchon de liaison (12') est relié au volant de direction (10), réalisé sous la forme d'une pièce coulée sous pression (10a), au moyen d'une déformation par complémentarité de formes.
